# EUROPEAN PATENT APPLICATION

(11) **EP 4 241 727 A1**
(43) Date of publication of application: **13.09.2023**
(21) Application number: 22382218.0
(22) Date of filing: 09.03.2022
(51) Int. Cl.: A61C 7/14, A61C 7/30

(54) **ORTHODONTIC LIGATURE**

(71) Applicant: Orthodontic Research and Development, S.L., 08017 Barcelona (ES)
(72) Inventor: CARRIERE LLUCH, Luis, 08017 BARCELONA (ES)
(74) Representative: de Rooij, Mathieu Julien

(57) **Abstract**

A ligature made of superelastic material, and configured to fit around an orthodontic bracket. The ligature forms a closed loop, and in a mounted state comprises an occlusal portion arranged at an occlusal side of the bracket, a gingival portion arranged at a gingival side of the bracket, a mesial portion arranged at a mesial side of the bracket, and a distal position arranged as a distal side of the bracket. The ligature is configured such that in a pre-mounting state, a perimeter of loop is the same as perimeter of the loop in the mounted state, and in the pre-mounting state, a distance between the occlusal portion and the gingival portion and/or a distance between the mesial portion and the distal portion is different than in the mounted state.

## Description

The present disclosure relates to orthodontic devices, and particularly relates to orthodontic ligatures for mounting around orthodontic brackets. The present disclosure furthermore relates to kits and methods for orthodontic treatments.

### BACKGROUND

The correction of dental irregularities and malocclusions by applying controlled forces to the teeth has become commonplace. For example, the use of orthodontic brackets is well known. Orthodontic brackets are typically bonded directly to the front of each tooth and come in a variety of styles and sizes, including self-ligating, lingual and titanium. The brackets act like handles that hold the arch wires that move the teeth. Single elastics or ligatures are placed around the perimeter of the bracket securing the archwire. The bands need to be changed or adjusted at monthly appointments as the teeth continue to move.

The ligatures are typically made of elastic O-rings, e.g. from silicone rubber, that are attached to the bracket to secure the archwire. Typically, an orthodontist will see a patient once a month or once every few weeks. At each visit, the orthodontist will adjust the brackets as needed for a treatment. Similarly, ligatures and/or archwires may be replaced during such visits.

Silicone rubber is used in many medical applications, and is thus biocompatible. Moreover, silicone rubber has good elastic properties. Silicone rubber however has a number of disadvantages as well. Firstly, the ligature loses its activity or effectivity rather quickly, e.g. within a few days, under the influence of constant stress, saliva and humidity. The rubber may furthermore absorb and trap water or food, which may lead to decalcification of teeth or gingival inflammation. Furthermore, friction between silicone rubber and a metal archwire is relatively high, affecting the effectiveness of the orthodontic treatment to resolve a patient's malocclusion.

Alternatively to elastic O-rings as ligatures, stainless steel ligatures are known as well. In such a case, an orthodontist uses a stainless steel wire, and winds it around the bracket. The wire is then typically wrapped around itself a number of times to close the loop of the ligature. The remainder of the wire is then cut off and discarded. The use of stainless steel ligatures is thus quite time consuming and labor intensive for the orthodontist. Generally, stainless steel ligatures are used to increase the retention of the archwire and providing a relatively high level of friction between the archwire and the ligature.

US 2013/0266907 discloses a ligature made of nitinol that describes a rectangular outline similar to an "O" format, which is noteworthy in that the free ends can be deflected to meet the need for affixing of the arch wire to the bracket, resulting in variable friction force. The nitinol ligature can reduce friction with the archwire, which can make an orthodontic treatment more effective. Moreover, nitinol does not suffer from the aforementioned disadvantages related to silicon rubber.

However, the structure proposed in this prior art document may not necessarily fulfill the high safety or security standards required by some orthodontists. If a ligature becomes dislodged from the bracket, there is a risk of swallowing. Attaching the ligature of this prior art document may moreover be more complicated than mounting a classic rubber band.

The present disclosure in various examples provides methods, and devices for use in orthodontic treatments that at least partially resolve some of the aforementioned problems.

### SUMMARY

In a first aspect, a ligature made of superelastic material, and configured to fit around an orthodontic bracket is provided. The ligature forms a closed loop, and in a mounted state comprises an occlusal portion arranged at an occlusal side of the bracket, a gingival portion arranged at a gingival side of the bracket, a mesial portion arranged at a mesial side of the bracket, and a distal position arranged at a distal side of the bracket. The ligature is configured such that in a pre-mounting state, a perimeter of the loop is the same as the perimeter of the loop in the mounted state, and in the pre-mounting state, a distance between the occlusal portion and the gingival portion and/or a distance between the mesial portion and the distal portion is different than in the mounted state.

The ligature according to this aspect can provide reduced friction as compared to ligatures made of silicon rubber or elastic bands. Reduced friction between ligature and archwire can make the orthodontic treatment more effective. Moreover, the ligature does not necessarily suffer the disadvantages of decolorization, brittleness, and loss of effectiveness associated with rubber bands.

The ligature according to this aspect has a closed loop. Compared to prior art systems involving an open ligature, the ligature according to the present disclosure is mechanically more resistant and can be more securely and more easily arranged around a bracket. The ligature is kept in place due to the superelastic effect. The ligature may be deformed for mounting around the bracket and therefore the ligature will have a tendency to revert back to its original shape. However, the bracket and/or arch wire impede the ligature to revert back to its original shape, and the ligature is thus securely fixed. Since the loop of the ligature does not actually change the overall perimeter between the pre-mounting state and the mounted state, in the pre-mounting state, the dimensions of the loop are adjusted in order to allow the ligature to fit around the bracket.

Compared to prior art stainless steel ligatures which are fabricated *in situ,* the ligatures proposed herein are easier to use and mount around orthodontic brackets.

A superelastic material may herein be regarded as a material that exhibits the superelastic or "pseudoelastic" effect. The pseudoelastic effect is an elastic (reversible) response to an applied stress, caused by a phase transformation between the austenitic and martensitic phases of a crystal. Examples of materials that disclose this type of behavior include Nitinol (nickel titanium alloys), Copper-Zinc-Aluminum, and e.g. Copper-Aluminum-Nickel.

A "pre-mounting" state as used throughout the present disclosure may refer to an "as delivered" or "default" state of the ligature. I.e. before manipulation by the orthodontist, the shape of the ligature will correspond to its pre-mounting state. A "mounted state" as used throughout the present disclosure may refer to the ligature after mounting around a bracket. I.e. the ligature has been deformed from its pre-mounting state to another shape. The ligature cannot revert back to its pre-mounting state due to parts of the bracket and/or arch wire.

The term "closed loop" is herein used to refer to a structure which is bent or curved, and the end of which is connected to its beginning i.e. the loop is closed in itself.

The term "perimeter" is herein used to refer to the length of the outline of a shape. Even though the term "perimeter" is often used to refer to two-dimensional bodies only, in the present disclosure it is used to refer to the total length of the outline of the ligature which is a three-dimensional body.

In some examples, the material may be a superelastic metallic material. In particular, the superelastic metallic material may be nitinol. Nickel titanium, also known as Nitinol, is a metal alloy of nickel and titanium, where the two elements are present in roughly equal atomic percentages. Different alloys are named according to the weight percentage of Nickel, e.g. Nitinol 55 and Nitinol 60. Nitinol 50 will have 50% Nickel by weight percentage and 50% Titanium. It exhibits the shape memory effect and superelasticity at different temperatures. Around body temperature, 37ºC, Nitinol will typically show superelastic behaviour. Moreover, nitinol is known to be a biocompatible material.

In some cases, copper may be added to Nitinol. Copper can change the temperature at which the shape memory transition occurs as well as the temperature transition range.

In some examples, the ligature may be further configured such that in the pre-mounting state the mesial and distal portion have more curvature than in the mounted state. "Curvature" is herein to be understood as a deviation from an imaginary plane extending along the occlusal-gingival direction (i.e. substantially parallel thereto). More curvature may thus be understood as a more pronounced deviation with respect to the imaginary plane. In other words, the radius of curvature between the occlusal and gingival portions is smaller in the pre-mounting state. The curvature with respect to this plane allows the ligature to be extended e.g. in the occlusal-gingival plane and/or in a mesial-distal plane in order to mount the ligature around the bracket.

In some examples, a distance between the occlusal portion and the gingival portion in the pre-mounting state is smaller than in the mounted state. In these examples, in the mounted state, the ligature will have a tendency to revert back to its original shape. The brackets may be shaped such that the ligature is forced to maintain its mounted state retaining the arch wire. In some of these examples, the ligature may further be configured such that a distance between the mesial and distal portions is substantially the same in the pre-mounting state and in the mounted state. In these examples, the ligature can become more versatile and be retained around a bracket in a more predictable manner regardless of the shape or size of the bracket.

In further examples, the ligature may be configured such that in the pre-mounting state, a distance between the mesial and distal portions is larger than in the mounted state. Alternatively, the ligature may be configured such that in the pre-mounting state, a distance between the mesial and distal portions is smaller than in the mounted state.

In examples, the loop in the pre-mounting state may be substantially circular in a top view. In other examples, the loop may be elliptical in a top view in the pre-mounting state. In yet further examples, the loop may have a polygonal shape, e.g. triangular or rectangular in a top view.

In examples, the ligature may be made from a wire that is welded at its ends to form the closed loop. In some examples, the ligature may be made by woven or braided wires or wire bundles.

In a further aspect, an orthodontic kit is provided, which comprises a ligature according to any the examples disclosed herein, and an orthodontic bracket. The orthodontic bracket comprises an archwire slot and one or more wings at a gingival side of the archwire slot, and one or more wings at an occlusal side of the archwire slot, and one or more of the wings is configured to retain the ligature.

### BRIEF DESCRIPTION OF THE DRAWINGS

Non-limiting examples of the present disclosure will be described in the following, with reference to the appended drawings, in which:
Figures 1A, 1B and 1C schematically illustrate a ligature according to an example in its pre-mounting state;
Figures 1D and 1E schematically illustrate how the ligature according to this example may deform in its mounted state;
Figures 2A and 2B schematically illustrate a ligature according to an example fitted around an orthodontic bracket;
Figures 3A and 3B schematically illustrate further examples of ligatures in their pre-mounting state;
Figures 4A - 4C schematically illustrate a further example of a ligature; and
Figure 5 schematically illustrates some terminology of the orthodontics field.

### DETAILED DESCRIPTION OF EXAMPLES

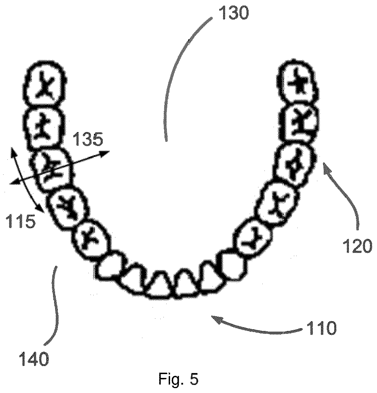

Figure 5 schematically illustrates the arrangement of teeth in the lower jaw (mandible). A front portion of the mouth 110 may be referred to as a mesial region. A rear portion of the mouth 120 may be referred to as a distal region. In orthodontics, mesial and distal are terms used to refer to something being respectively closer to and further away from a central midline of the arch of teeth.

In the distal region of the mouth, the molar zone may be found. The molar zone may include a first molar, a second molar and possibly a third molar ("wisdom tooth"). An inner portion of the mouth behind the teeth 130 may be referred to as a lingual region (a region in which the tongue is located). An outer portion of the mouth 140 may be referred to as a labial region (a region in which the lips are located). A mesial-distal direction 115 with respect to a specific tooth (first molar) has been schematically indicated in figure 5. Also indicated in figure 5 is a lingual-labial direction 135 with respect to the same tooth. This terminology will be adhered to in the present disclosure.

The term "gingival" as used throughout the present disclosure relates to the direction toward the gingiva (gums), synonymous with cervical. The term "occlusal" instead refers to the opposite direction, i.e. the direction toward the biting surface of teeth. The term occlusal is usually used in relation with posterior teeth, whereas for anterior teeth, the term "incisal" is sometimes used. Throughout the present disclosure, the term "occlusal" is intended to cover both "incisal" and "occlusal".

Even though a mandible is illustrated in this particular figure, it should be clear that the same terminology applies to the maxilla.

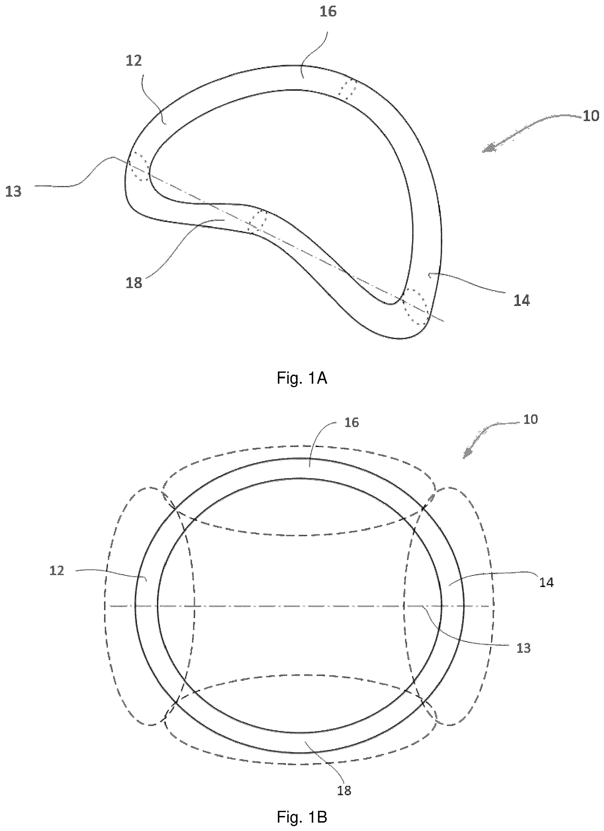

Figure 1A schematically illustrates a first example of a ligature 10. Figure 1A illustrates an isometric view of the ligature 10 in a pre-mounting state. The ligature 10 is made of a superelastic material, and in particular may be made of nitinol.

The ligature comprises a portion 12 which is a gingival portion, and a portion 14 which is an occlusal portion. I.e. the portion 12 when mounted around an orthodontic bracket is arranged close to a gum line of a patient, whereas portion 14 is arranged closer to the occlusal surface of a tooth.

The ligature 10 further comprises a mesial portion 16, and a distal portion 18. I.e. when mounted, the portion 16 is arranged at a mesial side of the bracket, and portion 18 is arranged at a distal side of the bracket. It is noted herein, that the ligature forms a closed loop and there is not necessarily a clear separation of one portion from another i.e. the portions identified herein are not separated from each other, and the boundary of where one portion begins and another portion ends are not necessarily identifiable.

Moreover, it is noted that the ligature 10 may be substantially symmetrical with respect to an axis 13 arranged along the occlusal-gingival direction. That is, the orthodontist or professional may position the ligature around the bracket as desired and the occlusal portion may become the gingival portion and *vice versa.*

Similarly, the ligature 10 may also be symmetrical with respect to an axis in the mesial-distal direction. The ligature may even be rotationally symmetrical.

In some examples however, markings may be provided on the ligature indicating which portion of the ligature is configured to be mounted at a given position relative to a bracket. E.g. color coding may be used, or small markings like dots may indicate a portion of the ligature. In further examples, the position in which the ligature is to be mounted may be clear from the shape of the ligature itself.

Figure 1B schematically illustrates a top view of the ligature 10. The ligature may be elliptical in the top view. In a further example, the ligature may be substantially circular in the top view. In figure 1B, the gingival portion 12, occlusal portion 14, mesial portion 16 and distal portion 18 are schematically indicated.

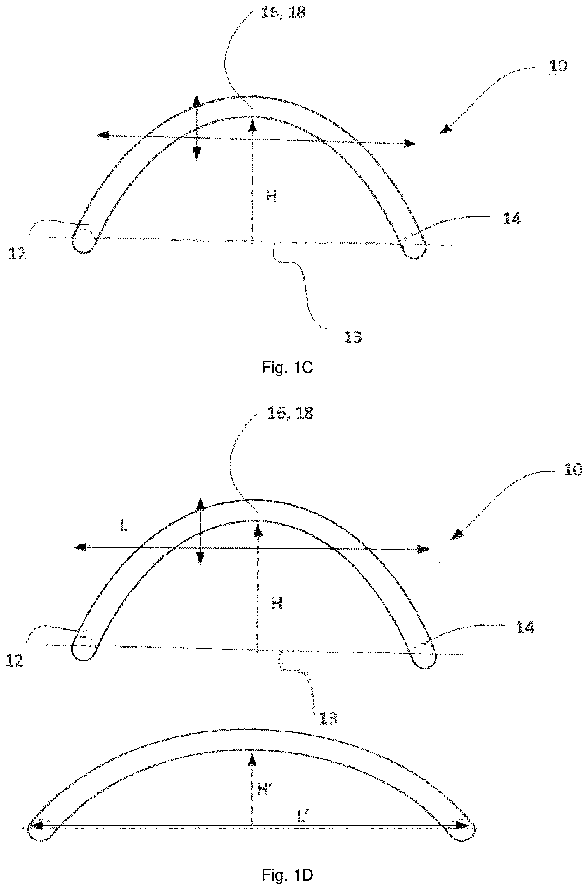

Figure 1C schematically illustrates a side view of a ligature 10. The axis 13 is illustrated in figure 1C as well. It may be seen that the ligature 10 is curved in that direction i.e. a height of the ligature with respect to a plane comprising axis 13 varies along the axis 13.

In the pre-mounting state, a maximum height of the ligature between the occlusal and gingival portions is H. If a "vertical" force is applied to the ligature, the height H may be reduced to H', as illustrated in figure 1D. At the same time, the length of the ligature L (i.e. a maximum distance between the occlusal portion and the gingival portion) is increased to L'.

Figure 1D schematically illustrates a comparison between the shape of the ligature in the pre-mounting state (top of figure 1D) and the ligature in the mounted state (bottom of figure 1 D). By reducing the curvature, the ligature may be fitted around a bracket. When fitted around the bracket, the ligature, due to its superelastic properties, will have a tendency to revert back to its pre-mounting state. I.e. the ligature will have a tendency to shorten the distance between the occlusal and gingival portions, and to increase the curvature to its original shape. However, the wings of the bracket and/or the archwire may avoid the ligature reverting to its pre-mounting state.

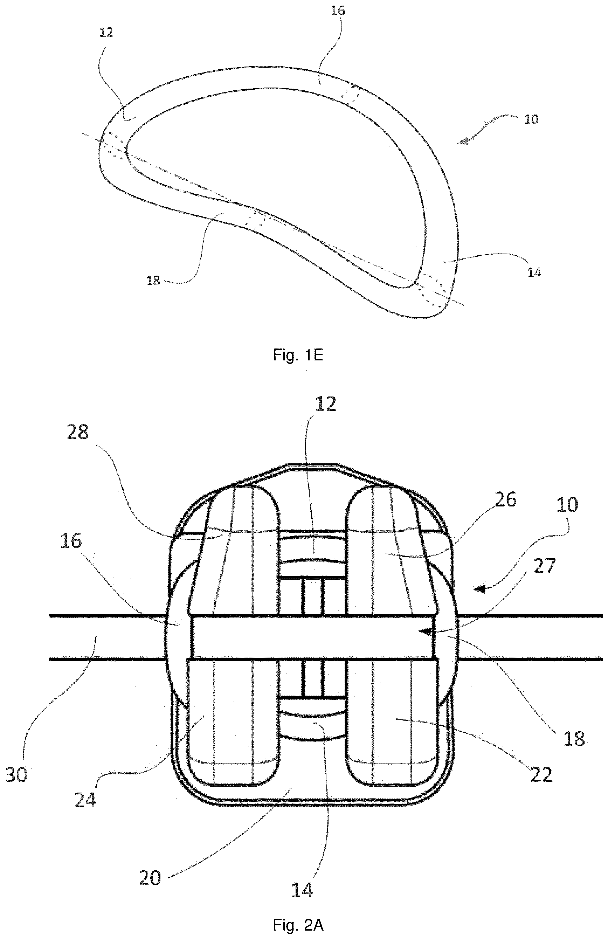

Figure 1E schematically illustrates the same ligature 10 in its mounted state (but without showing the orthodontic bracket).

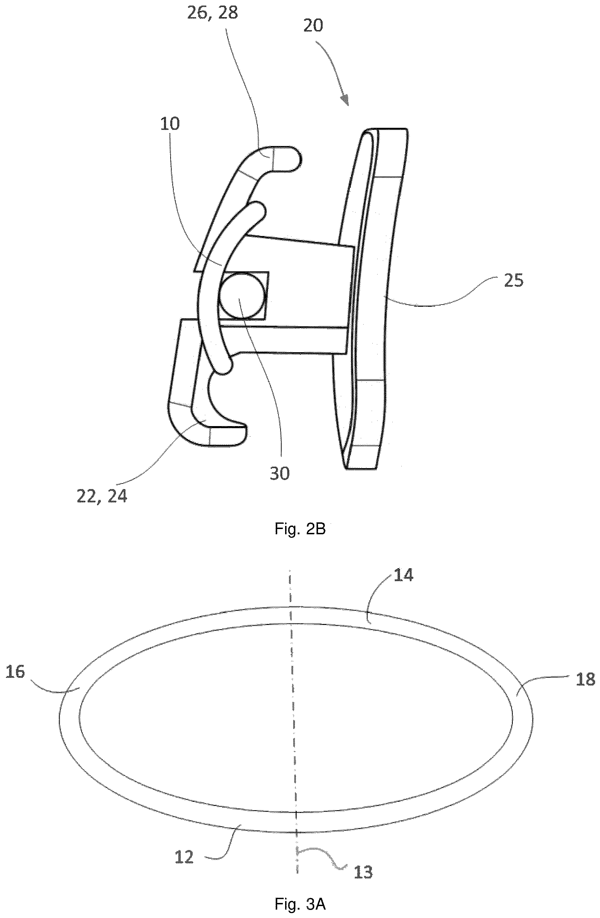

Figures 2A and 2B schematically illustrate a ligature according to an example fitted around an orthodontic bracket. The bracket 20 comprises an arch wire slot 27. An arch wire 30 may be arranged in slot 27 and may connect multiple brackets attached to multiple teeth to each other. The ligature 10 is configured to retain the arch wire 30 in slot 27.

The bracket 20 comprises occlusal wings 22, 24 and gingival wings 26, 28. The ligature 10 comprises an occlusal portion 14 underneath the wings 22, 24 and a gingival portion 12 underneath the wings 26, 28.

Figure 2B shows a side view of the same bracket 20 and same ligature 10. Mounting surface 25 of bracket 20 is also illustrated. The bracket 20 may be attached to a tooth at the mounting surface 25. The mounting surface may comprise protrusions or roughness to facilitate the mounting. Self-curing, resin reinforced glass ionomer cement is known for bonding orthodontic brackets to teeth.

In these examples, the ligature 10 may exert a force on the wings, 22, 24, 26, 28 and/or the arch wire because of its tendency to revert back to its pre-mounting shape.

As opposed to prior art elastic band ligatures, in a pre-mounting state, a perimeter of the loop formed by the ligature is the same as the perimeter of the loop in the mounted state, i.e. the overall length of the ligature is not increased even though the shape may have changed.

In order to be able to fit the ligature around the bracket, in the pre-mounting state, a distance between the occlusal portion and the gingival portion and/or a distance between the mesial portion and the distal portion is different than in the mounted state.

In some examples, a distance between the occlusal portion and the gingival portion in the pre-mounting state may be smaller than in the mounted state. Such an example is shown in figure 3A which illustrates the pre-mounting state of an example of a ligature. The ligature may be configured to be extra wide, i.e. a distance between the mesial and distal portion is larger in the pre-mounting state than in the mounted state. In order to fit the ligature around the bracket, the ligature may be pulled apart in the gingival-occlusal direction. Once fitted, the ligature will have a tendency to revert back but this may be impeded by occlusal or gingival surfaces of the bracket.

Alternatively or additionally, the ligature may be configured such that in the pre-mounting state the mesial and distal portion have more curvature than in the mounted state. In order to fit the ligature around the bracket, the curvature is reduced and a distance between the occlusal and gingival portion is increased. Once fitted, the ligature will have a tendency to revert back, but the base of the wings may be shaped such that the ligature is retained at a given position along the base.

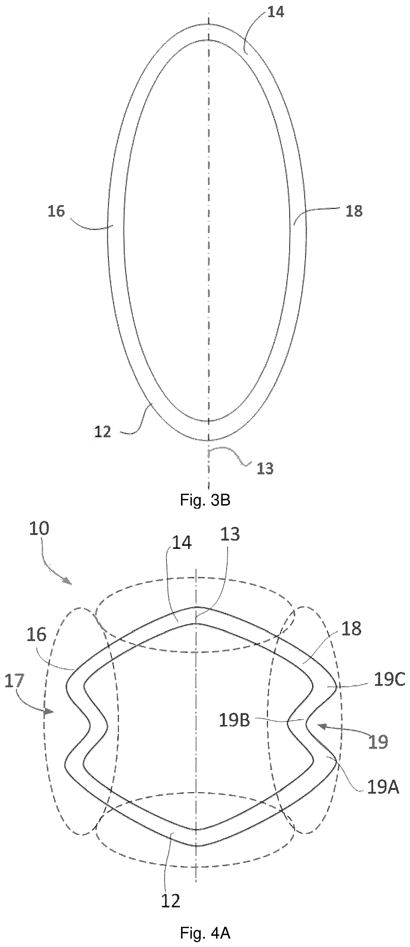

In some examples, the ligature may be configured such that in the pre-mounting state, a distance between the mesial and distal portions is smaller than in the mounted state. In this case, in order to fit the ligature around the bracket, the ligature may be widened to fit around the bracket. Once fitted around the bracket, the ligature will have a tendency to revert back to its original shape. The side surfaces of the orthodontic bracket may avoid the ligature to revert back to its original shape. The ligature is thus retained in its mounting state. Such a ligature is schematically illustrated in a top view in figure 3B.

In order to fit the ligature around the bracket, the distance between the mesial and distal portions is reduced, thereby increasing a distance between the occlusal and gingival portions. Reverting back to the original shape may be impeded by the shape of the bases of the wings. In some examples, the bases of the wings of the orthodontic brackets may comprise a specific recess or other retention feature to retain the ligature.

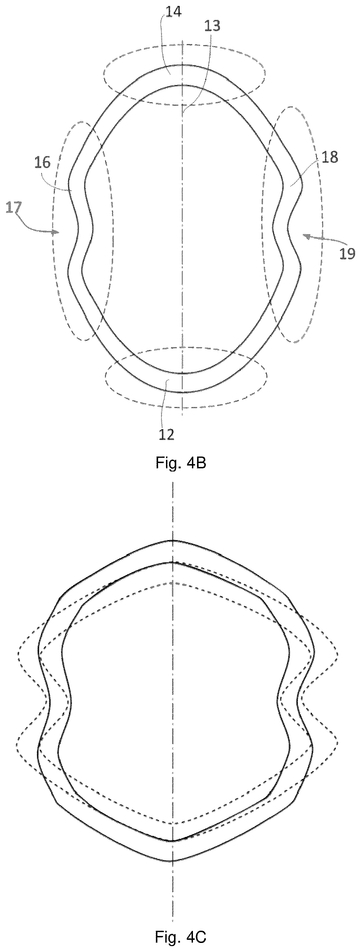

Figures 4A - 4C schematically illustrate yet a further example of a ligature according to the present disclosure. Figure 4A illustrates a top view of a ligature 10 in a pre-mounting state. Figure 4B illustrates a top view of a ligature 10 in its mounting state, or in the shape it obtains when a user is in the process of fitting the ligature around a bracket.

In figure 4A, in a similar manner as before, a gingival portion 12, an occlusal portion 14, and mesial and distal portions 16 and 18 have been indicated. In the example of figure 4A, the mesial and distal portions include a substantially wave-shaped segment, 17 and 19 respectively. The wave-shape may comprise straight portions to form a zigzag shape, but may also comprise rounded or curved portions to form a sine shape.

The wave shaped segments 17 and 19 in the mesial and distal portions may be configured to absorb most or all of the increase in distance between the gingival and occlusal portions of the ligature. The zigzag shape can provide a hinge points (illustrated e.g. as 19A, 19B, 19C) at the crests and troughs of the wave-shaped segment. The stretching may occur specifically between these hinge points as portions are rotated around the hinge points to become more aligned with the axis 13 indicating the occlusal-gingival direction. Even though stretching may occur through the whole ligature, with a wave-shape segment, the stretching may be concentrated in this segment.

It will be clear that the wave-shape segment may include more crests and troughs as desired. The height of the wave shaped segment (measured substantially perpendicular to axis 13 with respect to an imaginary straight line or a line of continuous curvature extending between the mesial and distal portions) may be adapted as needed.

In figure 4B, the same ligature 10 is shown after stretching the ligature in the occlusal-gingival direction (axis 13). The distance between the occlusal and gingival portions has been increased in the mounted state, as the height of the waves has been reduced and the portions of the wave-shaped segment have become more aligned with the gingival-occlusal direction, but the distance between the mesial and distal portions has been maintained substantially the same as in the pre-mounting state.

Figure 4C schematically illustrates a comparison between the ligature in its pre-mounting state and the same ligature in its mounted state. In this comparison it may be seen that most of the deformation is concentrated in the wave-shaped segment.

In some examples, a cross-section of the ligature may not be constant. The cross-sectional dimensions may be varied in order to control the portions that will deform most. For example, in the example of figures 4A - 4C, the wave-shaped segment may be thinner than other portions of the ligature. This can help to ensure that particularly that segment will deform when mounted around the ligature.

In any of the examples disclosed herein, the wires or bundles of wires forming the ligature may have a variety of cross-sections, e.g. substantially circular, hexagonal, rectangular, further polygonals or other.

The dimensions of the ligature may be determined in accordance with the shape of the ligature chosen. In case of a circular cross-section, a wire may be used with a diameter of 0.008 to 0.012 inches (0.2032 mm - 0.3048 mm). A distance between mesial and distal portions and between occlusal and gingival portions, as well as the curvature (if any) may be adapted to specific orthodontic brackets or the ligatures dimensions may be chosen such that they can be used with (almost) all available orthodontic brackets. The dimensions may be varied particularly depending on the overall shape of the ligature.

In a further aspect, the present disclosure provides an orthodontic kit comprising a ligature according to any of the examples illustrated herein, and one or more orthodontic brackets. The orthodontic brackets and ligatures may be adapted to each other, such that the ligatures can be easily mounted and retained around the bracket. The orthodontic bracket(s) comprise an archwire slot and one or more wings at a gingival side of the arch wire slot, and one or more wings at an occlusal side of the arch wire slot, and one or more of the wings are configured to retain the ligature.

In some examples, the distal and/or mesial sides may be in contact with the ligature to retain the ligature. Alternatively or additionally, the underside of the wings of the orthodontic bracket may be in contact with the ligature to retain it. In some examples, the orthodontic brackets may have specific features such as protrusions and recesses specifically aimed at retaining the ligature in a given position.

In all examples disclosed herein, the loop of the ligature in the pre-mounting state is substantially rounded, i.e. circular or elliptical. It should be clear that in other examples, straight edges, including e.g. rectangular shapes may be used as well.

In any of the examples disclosed herein, a suitable tool may be used for mounting the ligature around an orthodontic bracket. E.g. mosquito forceps may be used by an orthodontist for mounting.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A ligature made of superelastic material, and configured to fit around an orthodontic bracket, wherein
the ligature forms a closed loop, and in a mounted state comprises an occlusal portion arranged at an occlusal side of the bracket, a gingival portion arranged at a gingival side of the bracket, a mesial portion arranged at a mesial side of the bracket, and a distal position arranged as a distal side of the bracket, and wherein the ligature is configured such that
in a pre-mounting state, a perimeter of the loop is the same as the perimeter of the loop in the mounted state, and wherein
in the pre-mounting state, a distance between the occlusal portion and the gingival portion and/or a distance between the mesial portion and the distal portion is different than in the mounted state.

2. The ligature according to claim 1, wherein the ligature is configured such that in the pre-mounting state the mesial and distal portion have more curvature than in the mounted state.

3. The ligature according to claim 1 or 2, wherein a distance between the occlusal portion and the gingival portion in the pre-mounting state is smaller than in the mounted state.

4. The ligature according to claim 3, wherein a distance between the mesial and distal portions in the pre-mounting state is substantially the same as in the mounted state.

5. The ligature according to claim 3 or 4, wherein the mesial portion and the distal portion of the ligature include a wave-shaped segment.

6. The ligature according to any of claims 1 - 3 wherein the ligature is configured such that in the pre-mounting state, a distance between the mesial and distal portions is larger than in the mounted state.

7. The ligature according to any of claims 1 - 3, wherein the ligature is configured such that in the pre-mounting state, a distance between the mesial and distal portions is smaller than in the mounted state.

8. The ligature according to any of claims 1 - 7, wherein the loop in the pre-mounting state is substantially circular in a top view.

9. The ligature according to any of claims 1 - 8, wherein the material is a superelastic metallic material.

10. The ligature according to claim 9, wherein the superelastic metallic material is nitinol.

11. The ligature according to any of claims 1 - 10, wherein the ligature is made from a wire that is welded at its ends to form the closed loop.

12. The ligature according to claim 11, wherein the ligature has a diameter of 0.008 - 0.012 inches.

13. The ligature according to any of claims 1 - 12, wherein the ligature is made by woven or braided wires or wire bundles.

14. The ligature according to any of claims 1 - 13, comprising marking indicating an orientation for mounting around an orthodontic bracket.

15. An orthodontic kit comprising the ligature according to any of claims 1 - 14, and an orthodontic bracket, the orthodontic bracket comprising an arch wire slot and one or more wings at a gingival side of the arch wire slot, and one or more wings at an occlusal side of the arch wire slot, and wherein one or more of the wings is configured to retain the ligature.
